# EUROPEAN PATENT APPLICATION

(11) **EP 1 852 273 A1**
(43) Date of publication of application: **07.11.2007**
(21) Application number: 07008944.6
(22) Date of filing: 03.05.2007
(51) Int. Cl.: B60B 29/00

(54) **Auxiliary device for workshop machines suitable for lifting wheels for vehicles, particularly for tyre-changing machines or the like**

(30) Priority: 05.05.2006 IT MO20060142
(71) Applicant: GIULIANO S.P.A., 42015 Correggio (Reggio Emilia) (IT)
(72) Inventor: Bonacini, Fabrizio, 42015 Correggio (RE) (IT)
(74) Representative: Brogi, Graziano

(57) **Abstract**

The auxiliary device for workshop machines suitable for lifting wheels for vehicles, particularly for tyre-changing machines or the like, comprises at least one carrying structure associable with a workshop machine, at least one lifting arm having an end hinged on the carrying structure around a substantially horizontal axis and having a free end for supporting removable coupling means for coupling to at least one wheel for vehicles, and driving means for driving the rotation of the lifting arm around the substantially horizontal axis.

## Description

This invention relates to an auxiliary device for workshop machines suitable for lifting wheels for vehicles, particularly for tyre-changing machines or the like.

The use is known of so-called tyre-changing machines that permit fitting or removing the tyre onto and from the relevant rim of a wheel for vehicles, e.g., for carrying out maintenance jobs or replacing the rim and/or the tyre itself.

The known tyre-changing machines generally comprise a frame for supporting gripping and rotating means of the rim of a wheel, and for supporting a tool arm having at least one tool suitable for removing and/or fitting the tyre from and onto the rim.

The gripping and rotating means are generally arranged at a pre-determined distance from the ground, and the positioning of the wheel on these is usually done manually by an operator charged with running the machine.

Such manual operations are often tiring and laborious for the operator, particularly in the case of the wheel to be lifted being of considerable weight and overall dimensions.

To make the operator's task easier, the use is known of lifting devices able to automate at least in part the handling and the positioning of the wheel on the tyre-changing machine.

A first known type of such lifting devices comprises a platform moving in a substantially vertical direction and driven by motor means.

The wheel, resting on such platform, is lifted to a height close to that of the gripping and rotating means, limiting the operator's manual intervention.

In this case as well, however, the wheel has to be lifted and handled manually from the platform for positioning on the tyre-changing machine.

A second type of lifting devices provides for the use of a hoist having a horizontal support arm fixed close to the upper end of a support upright.

The hoist comprises a hook fixable to the rim of the wheel to be lifted and the horizontal arm can rotate around a vertical axis to allow moving closer and positioning the lifted wheel on the gripping and rotating means (and subsequently moving it away).

Such lifting devices of the traditional type are however susceptible to upgrading, in order, in particular, to improve operating mobility and versatility and facilitate the correct positioning of the wheel on the gripping and rotating means.

With particular reference to tyre-changing machines having gripping and rotating means arranged on a substantially horizontal plane, the use is known of a third type of lifting devices comprising a holding cage for the wheel to be worked on which, by means of motor means, can be moved sideways in a vertical direction and can be rotated to overturn the wheel between a vertical position and a horizontal position.

The wheel to be worked on is arranged substantially vertical inside the cage which is placed close to the ground; the cage is subsequently moved sideways vertically to lift the wheel and rotated to overturn the wheel from the vertical position to the horizontal position, on the gripping and rotating means for the subsequent fixing by the operator.

These known lifting devices are also susceptible however to upgrading, aimed in particular at reducing the structural complexity and at making use easier.

The main aim of this invention is to provide an auxiliary device for workshop machines suitable for lifting wheels for vehicles, particularly for tyre-changing machines or the like, which permits limiting the manual interventions of an operator and, at the same time, achieving the above-mentioned upgrading.

Within the sphere of this technical aim, another object of this invention is to cater for the above aims with a simple structure, of relatively practical implementation, safe to use and with effective operation, as well as having a relatively low cost.

The objects expounded above are all achieved by the present auxiliary device for workshop machines suitable for lifting wheels for vehicles, particularly for tyre-changing machines or the like, characterized in that it comprises at least one carrying structure associable with a workshop machine, at least one lifting arm having an end hinged on said carrying structure around a substantially horizontal axis and having a free end for supporting removable coupling means for coupling to at least one wheel for vehicles, and driving means for driving the rotation of said lifting arm around said substantially horizontal axis.

Further characteristics and advantages of this invention will appear even more evident from the detailed description of a preferred, but not exclusive, embodiment of an auxiliary device for workshop machines suitable for lifting wheels for vehicles, particularly for tyre-changing machines or the like illustrated indicatively by way of non limiting example, in the attached drawings wherein:

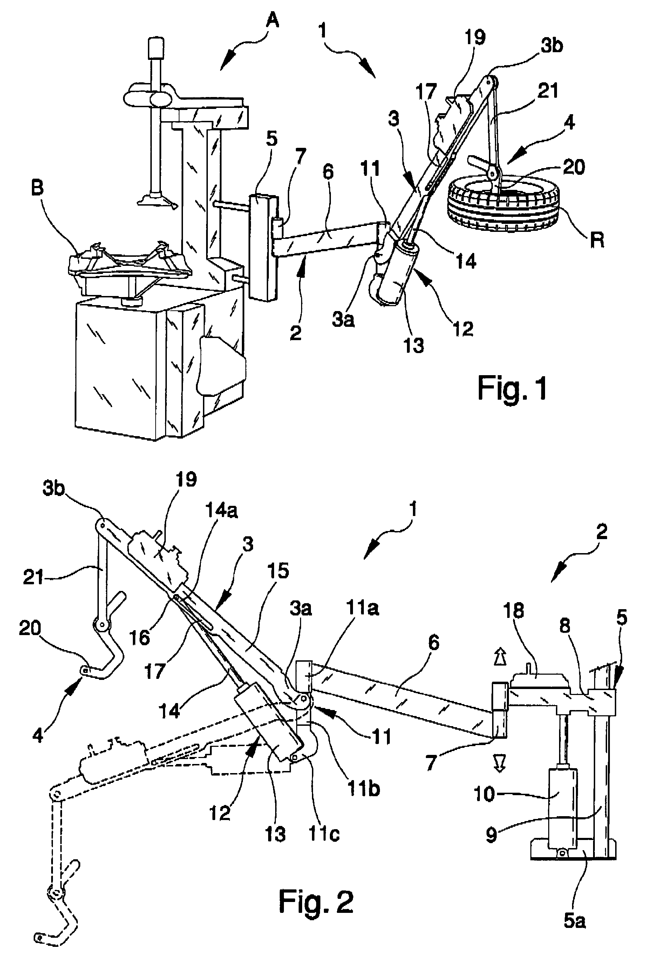

figure 1 is a schematic and perspective view of the device, according to the invention, fitted to a tyre-changing machine for fitting and removing tyres;
figure 2 is a side schematic view of the device according to the invention.

With particular reference to such figures, an auxiliary device has been globally indicated by 1 suitable for lifting wheels for vehicles, used particularly for handling and positioning wheels on gripping and rotating means of the rim of a wheel in tyre-changing machines suitable for fitting and/or removing tyres.

The device 1 comprises a carrying structure 2 that is fixable to the frame of a machine A for fitting and removing tyres onto/from a wheel R, a lifting arm 3 which has an end 3a hinged to the carrying structure 2, around a horizontal axis, and a free end 3b, opposite the hinged end 3a, which supports removable coupling means 4 for coupling to the wheel R.

In the particular, but not exclusive, embodiment shown in the above figures, the carrying structure 2 comprises a turret 5 from which extends substantially horizontal a support arm 6 of the hinged end 3a of the lifting arm 3.

Advantageously, the support arm 6 is associated with the mobile turret 5 moving sideways along a vertical axis and revolving around such axis of a predetermined angle.

In particular, the support arm 6 has an end having a hinging element 7 hinging around the above-mentioned vertical axis, which is integrally associated with a sliding carriage 8 moving along at least one section of an upright 9 of the turret 5 by the action of movement means 10.

Usefully, the movement means 10 are made up of a first linear actuator, e.g. of the pneumatic actuator type, which has one end associated with the sliding carriage 8, and the opposite end fixed to a supporting base 5a integrally associated with the lower end of the upright 9.

The end of the support arm 6 opposite the carrying structure 2 has an articulated joint 11, with which is associated the hinged end 3a of the lifting arm 3, which is suitable for permitting the rotation of the lifting arm 3, with respect to the support arm 6, around a substantially vertical axis.

In particular, the articulated joint 11 comprises an upper portion 11a fixed to the support arm 6, and a lower portion 11b which is coupled revolving on a vertical axis to the upper portion 11 a, and to which the hinged end 3a of the lifting arm 3 is fulcrumed.

The device 1 comprises driving means 12 for driving the rotation of the lifting arm 3 with respect to the support arm 6 around a horizontal axis for lifting and/or lowering a wheel secured to the coupling means 4.

The driving means 12 are made up of a second actuator of the linear type, by fluid or mechanical means, which comprises a first element 13 having a hinged end at a section 11c protruding from the lower portion 11b of the articulated joint 11, and a second element 14, axially coupled sliding to the first element 13, and associated close to a substantially median section of the lifting arm 3.

The second actuator 12 can be made up, e.g., of a hydraulic jack in which the first element 13 is defined by the jack cylinder and the second element 14 by the respective piston.

Advantageously, two side edges 15 extend for the length of the lifting arm 3 parallel to and distanced from each other and between these is fitted a protruding portion 14a of the second element 14. Two sliding elements 16, of the pin type or the like, extend in diametrically opposite directions from the protruding portion 14a and are associated sliding inside respective elongated slots 17 defined on the side edges 15, along the above-mentioned substantially median section of the liftnag arm 3.

The driving means 12 and the movement means 10 can be operated by means of interface means controllable by an operator in charge of controlling the machine A, which comprise a first push-button panel 18 arranged on the turret 5, and a second push-button panel 19, arranged at the lifting arm 3.

The coupling means 4 comprise at least one hook 20 which is associated with the free end 3b by the interposition of a hanging element 21 and which has a portion fittable inside an opening on the rim of the wheel R to be lifted.

In particular, the hanging element 21 is made up of a rigid rod hinged to an end at the free end 3b, and at the opposite end of which the above-mentioned hook 20 is hinged

Different types and shapes cannot however be ruled out of the hanging element 21 which can be made up, e.g., of a cable or the like.

With particular reference to a lifting and positioning operation of a wheel R on the gripping and rotating means B of the machine A, the operation of the device 1 is the following.

First of all, the operator operates the first and/or the second push-button panel. 18 and 19, by operating the first and/or the second actuator 10 and 12 and lowering the hook 20 to position this near a wheel R resting on the floor.

Subsequently, the operator manually fits the hook 20 inside an opening in the rim of the wheel R and, always by operating the controls of the first and/or second push-button panel 18 and 19, moves the support arm 6 and the lifting arm 3, with the lifting of the wheel.

In particular, such lifting envisages the transition of the second actuator 12 from a retracted position to an extended position, with upward rotation of the lifting arm 3 around a fulcrum defined at the hinged end 3a, and the transition of the first actuator 10 from a retracted position to an extended position, with the vertical side movement and upward movement of the support ann 6.

Once the wheel R has been lifted to a height above that of the gripping and rotating means B, the operator moves the wheel R closer to the machine A by manually rotating the support arm 6 around the vertical axis defined at the hinging element 7 and/or rotating the lifting arm around the vertical axis defined at the articulated joint 11.

With the wheel R correctly aligned, the operator lowers the hook 20 until the wheel R is positioned on the gripping and rotating means B, on which he/she then secures the rim.

During this positioning phase, in the event of the second actuator 12 continuing to retract also following the resting of the wheel R on the gripping and rotating means B, the pins 16 slide inside the elongated slots 17, approaching with respect to the hinged end 3a, avoiding structural damage to the device 1, to the machine A and/or to the wheel R.

Once the hook 20 has been removed the operator proceeds with the subsequent operations relating to the fitting or removal of the tyre on or from the rim.

The phases of removal and moving away of the wheel R from the machine A are easily deducible from what has been described above for the lifting and positioning phases.

It has in fact been seen how the described invention achieves the set objects, and in particular the fact is underlined that the presence of the lifting arm, together with the presence of the support arm, articulated together, though limiting the structural complexity of the device, permits a high degree of mobility facilitating the correct positioning of the wheel on the gripping and rotating means of the machine.

The invention thus conceived is susceptible of numerous modifications and variations, all of which falling within the scope of the inventive concept.

Furthermore all the details may be replaced by other elements which are technically equivalent.

In practice, the materials used, as well as the contingent shapes and dimensions, may be any according to requirements without because of this moving outside the protection scope of the following claims.

## Claims

1. Auxiliary device for workshop machines suitable for lifting wheels for vehicles, particularly for tyre-changing machines or the like, **characterized in that** it comprises at least one carrying structure associable with a workshop machine, at least one lifting arm having an end hinged on said carrying structure around a substantially horizontal axis and having a free end for supporting removable coupling means for coupling to at least one wheel for vehicles, and driving means for driving the rotation of said lifting arm around said substantially horizontal axis.

2. Device according to claim 1, **characterized in that** said carrying structure comprises at least one support arm of said hinged end of the lifting arm.

3. Device according to one or more of the preceding claims, **characterized in that** said support arm is substantially horizontal.

4. Device according to one or more of the preceding claims, **characterized in that** said hinged end of the lifting arm is associated with said support arm rotating around a substantially vertical axis.

5. Device according to one or more of the preceding claims, **characterized in that** said carrying structure comprises at least one turret which extends substantially vertical.

6. Device according to one or more of the preceding claims, **characterized in that** said support arm has the end opposite said support arm associated with said turret.

7. Device according to one or more of the preceding claims, **characterized in that** said carrying structure comprises movement means for moving said hinged end of the lifting arm along a substantially vertical direction.

8. Device according to one or more of the preceding claims, **characterized in that** said movement means comprise a sliding carriage moving along a substantially vertical direction on said turret, said support arm being associated with said sliding carriage.

9. Device according to one or more of the preceding claims, **characterized in that** said movement means comprise at least one first linear actuator placed in between said turret and said sliding carriage.

10. Device according to one or more of the preceding claims, **characterized in that** said support arm has the end opposite said lifting arm associated with said carriage rotating around a substantially vertical axis.

11. Device according to one or more of the preceding claims, **characterized in that** said driving means comprise at least a second actuator of the linear type placed in between said lifting arm and said carrying structure.

12. Device according to one or more of the preceding claims, **characterized in that** said second linear actuator comprises a first element hinged on said carrying structure.

13. Device according to one or more of the preceding claims, **characterized in that** said second linear actuator comprises a second element coupled sliding to said first element and associated with said lifting arm.

14. Device according to one or more of the preceding claims, **characterized in that** said second element is associated axially sliding along at least one section of said lifting arm.

15. Device according to one or more of the preceding claims, **characterized in that** said second element comprises at least one element sliding inside at least one elongated slot which extends longitudinally along said section of the lifting arm.

16. Device according to one or more of the preceding claims, **characterized in that** said elongated slot is defined on at least one side edge which extends along said section of the lifting arm.

17. Device according to one or more of the preceding claims, **characterized in that** said section is defined along a substantially median section of said lifting arm.

18. Device according to one or more of the preceding claims, **characterized in that** at least one between said first actuator and said second actuator is of the fluid means type.

19. Device according to one or more of the preceding claims, **characterized in that** at least one between said first actuator and said second actuator is of the mechanical means type.

20. Device according to one or more of the preceding claims, **characterized in that** it comprises interface means suitable for driving at least one between said first actuator and said second actuator.

21. Device according to one or more of the preceding claims, **characterized in that** said interface means comprise at least a first push-button panel arranged on said turret.

22. Device according to one or more of the preceding claims, **characterized in that** said interface means comprise at least a second push-button panel, arranged at said lifting arm.

23. Device according to one or more of the preceding claims, **characterized in that** said coupling means comprise at least one hook.

24. Device according to one or more of the preceding claims, **characterized in that** said hook is associated with said free end by interposition of at least one hanging element.

25. Device according to one or more of the preceding claims, **characterized in that** said hanging element is of the rigid rod type with an end hinged at said free end of the lifting arm and at the opposite end of which said hook is hinged.

26. Device according to one or more of the preceding claims, **characterized in that** said hanging element is of the cable type.
